# EUROPÄISCHE PATENTSCHRIFT

(11) **EP 3 527 059 B1**
(45) Veröffentlichungstag und Bekanntmachung des Hinweises auf die Patenterteilung: **04.05.2022**
(21) Anmeldenummer: 18207939.2
(22) Anmeldetag: 23.11.2018
(51) Int. Cl.: A01D 41/127

(54) **MÄHDRESCHER SOWIE VERFAHREN ZU DESSEN BETRIEB**
COMBINE HARVESTER AND METHOD FOR THE OPERATION OF SAME
MOISSONNEUSE-BATTEUSE AINSI QUE SON PROCÉDÉ DE FONCTIONNEMENT

(30) Priorität: 15.02.2018 DE 102018103373
(43) Veröffentlichungstag der Anmeldung: 21.08.2019
(73) Patentinhaber: CLAAS Selbstfahrende Erntemaschinen GmbH, 33428 Harsewinkel (DE)
(72) Erfinder: Neitemeier, Dennis, 59510 Lippetal (DE); Fischer, Frédéric, 59823 Arnsberg (DE); Sprigade, Daniel, 59427 Unna (DE); Brune, Markus, 33428 Harsewinkel (DE); Kettelhoit, Boris, 33335 Gütersloh (DE); Großegesse, Philipp, 33334 Gütersloh (DE); Arnold, Andreas, 33619 Bielefeld (DE)
(74) Vertreter: CLAAS Gruppe

(56) Entgegenhaltungen:
- EP-A2- 1 266 558
- EP-A2- 2 218 320
- EP-B1- 2 218 320
- DE-B3-102012 223 432
- DE-C2- 4 311 054
- US-B1- 6 213 870

## Beschreibung

Die vorliegende Anmeldung betrifft einen Mähdrescher gemäß dem Oberbegriff von Anspruch 1. Weiterhin betrifft die vorliegende Anmeldung ein Verfahren zum Betrieb eines Mähdreschers gemäß dem Oberbegriff von Anspruch 7.

Ein solcher Mähdrescher umfasst insbesondere ein Schneidwerk, einen Schrägförderer sowie weitere dem Schrägförderer nachgeschaltete Arbeitsorgane. Hierzu ist insbesondere mindestens ein Dreschorgan zu nennen, mittels dessen Früchte geschnittener Pflanzen von selbigen ablösbar sind, sodass die Früchte fortan losgelöst von Pflanzenresten der Pflanzen vorliegen. Das Gemisch aus losgelösten Früchten und Pflanzenresten wird sodann typischerweise einem Trennorgan zugeleitet, mittels dessen die Früchte, beispielsweise Körner, von den Pflanzenresten trennbar sind. Die Pflanzenreste werden schließlich an einer Rückseite des Mähdreschers ausgeworfen, während die Früchte in einem dafür vorgesehenen Tank gelagert werden.

Der Schrägförderer eines solchen Mähdreschers hat die Aufgabe, die bodennah geschnittenen Pflanzen in Richtung des Dreschorgans zu fördern. Hierbei hat der Schrägförderer in aller Regel neben der reinen Förderfunktion zudem auch eine Bündelungsfunktion, da eine Breite des Schneidwerks in aller Regel eine Breite eines Förderkanals des Schrägförderers deutlich übersteigt. Dies hat zur Folge, dass die geschnittenen Pflanzen nach deren Schnitt in eine Richtung quer zur Fahrtrichtung des Mähdreschers zusammengeführt und dem Förderkanal zugeführt werden. Ein Schrägförderer weist typischerweise mindestens eine Fördereinrichtung auf, die wiederum mindestens zwei einander gegenüberliegende Rollen sowie mindestens einen die Rollen umspannende Endlosgurt aufweist. In aller Regel umfasst die Fördereinrichtung eine Mehrzahl solcher Rollen sowie eine Mehrzahl mit diesen zusammenwirkender Endlosgurte. Letztere können beispielsweise mit einer Mehrzahl von sich quer zu einer Förderrichtung des Schrägförderers erstreckenden Förderleisten bzw. Schlagleisten zusammenwirken, die letztlich dazu geeignet sind, mit den geschnittenen Pflanzen einzugreifen und auf diese Weise entlang des Förderkanals schräg nach oben in Richtung des Dreschorgans zu fördern.

Für einen effizienten Betrieb eines Mähdreschers ist es von besonderem Interesse, einen möglichst großen Durchsatz von Erntegut in Form geschnittener Pflanzen zu erzielen. Ein maximaler Durchsatz ist dabei lediglich durch die Leistungsfähigkeit des Mähdreschers begrenzt, die dem Dreschorgan zugeführten Pflanzen weiterverarbeiten zu können. Hierbei ist es insbesondere von Interesse, einen Verlust von Früchten, insbesondere von Körnern, auf einem möglichst niedrigen Niveau zu halten. Entsprechend ist es aus dem Stand der Technik bereits bekannt, eine Durchflussmenge geschnittener Pflanzen im Bereich des Schrägförderers zu messen und auf diese Weise beispielsweise eine Fahrgeschwindigkeit des Mähdreschers anzupassen. Hierzu wird beispielhaft auf die deutsche Patentschrift DE 43 11 054 C2 verwiesen. In besagter Schrift wird als Messeinrichtung zur Erfassung einer Schichthöhe innerhalb des Förderkanals des Schrägförderers eine sogenannte Schichthöhenwalze verwendet. Hierbei handelt es sich um ein mechanisches Bauteil, das in Abhängigkeit der Schichthöhe der geschnittenen Pflanzen innerhalb des Förderkanals ausgelenkt wird, wobei in Abhängigkeit von besagter Auslenkung ein Rückschluss auf die Schichthöhe gezogen wird.

Die bekannte Vorrichtung weist jedoch den besonderen Nachteil auf, dass ein mit ihr abbildbarer Messbereich sowohl nach unten als auch nach oben hin begrenzt ist. Dies ist durch mechanische Anschläge der Messeinrichtung bzw. der Schichthöhenwalze bedingt. Dies kann insbesondere zur Folge haben, dass eine genaue Aussage über den Massenstrom geschnittener Pflanzen, der mittels des Schrägförderers dem Dreschorgan zugeleitet wird, innerhalb des in aller Regel effizientesten Betriebsbereichs des Mähdreschers nicht möglich ist, da in besagtem Betriebsbereich die Schichthöhe der geschnittenen Pflanzen typischerweise derart hoch ist, dass sich die Schichthöhenwalze bereits an ihrem oberen Anschlag befindet.

Zudem sind etwa aus der US6,213,870B1 berührungslos Guteigenschaftenmessende Sensoren bekannt geworden, die punktuell die Gutstromdicke im Förderkanal ermitteln. Derartige Systeme haben den Nachteil, dass nur vage auf die Schichthöhe und den Durchsatz wegen der punktuellen Messung geschlossen werden kann.

Mithin liegt der vorliegenden Anmeldung die Aufgabe zugrunde, einen Mähdrescher bereitzustellen, mittels dessen Informationen betreffend die Schichthöhe der geschnittenen Pflanzen innerhalb des Förderkanals des Schrägförderers zuverlässiger gewonnen werden können.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den Unteransprüchen 2 bis 6.

Der erfindungsgemäße Mähdrescher umfasst eine Messeinrichtung, die wiederum mindestens eine Sensoreinrichtung umfasst. Diese ist derart ausgebildet, dass sie dazu geeignet ist, die Schichthöhe der geschnittenen Pflanzen innerhalb des Förderkanals berührungslos zu erfassen. Insbesondere kann die Sensoreinrichtung mindestens ein Sensorelement aufweisen, das als induktives Sensorelement ausgebildet ist.

Der erfindungsgemäße Mähdrescher hat viele Vorteile. Insbesondere kann die Bestimmung der Schichthöhe der geschnittenen Pflanzen unabhängig von mechanischen Beschränkungen der Messeinrichtung stattfinden, indem die Messung mittels der berührungslos arbeitenden Sensoreinrichtung vorgenommen wird. Auf diese Weise ist der Bereich erfassbarer Schichthöhen innerhalb des Förderkanals weder nach oben noch nach unten hin beschränkt. Dies hat wiederum zur Folge, dass Informationen betreffend den Massenstrom geschnittener Pflanzen zuverlässiger erfasst und letztlich der zugehörige Mähdrescher genauer geregelt werden können.

Abgesehen von der reinen absoluten Durchflussmenge der Pflanzen hat es sich weiterhin als relevant herausgestellt, auf welche Weise diese Pflanzen innerhalb des Förderkanals, das heißt über eine Breite des Förderkanals hinweg, in dem Schrägförderer verteilt sind. Somit hat es sich als nachteilig erwiesen, wenn beispielsweise an den Rändern des Förderkanals eine besonders hohe Dichte der geschnittenen Pflanzen vorliegt, während in einem Mittelbereich des Förderkanals lediglich geringe Mengen der Pflanzen gefördert werden. Neben einer asymmetrischen Beschickung des dem Schrägförderer nachgeschalteten Dreschorgans hat diese ungleiche Querverteilung der Pflanzen vor allem zur Folge, dass im Anschluss an das Dreschorgan auch ein jeweils nachgeschaltetes Trennorgan ungleichmäßig beschickt wird. Dies ist im Hinblick auf eine möglichst vollständige Trennung der mittels des Dreschorgans abgelösten Früchte von den Pflanzenresten nachteilig, da besagte Trennung für eine vergleichsweise dick auf einem Sieb des Trennorgans aufliegende Schicht nicht derart zuverlässig ausgeführt werden kann, wie bei einer demgegenüber dünneren Schicht. Mit anderen Worten ist ein Verlust an losgelösten Früchten umso größer, desto konzentrierter das von dem Dreschorgan stammende Gemisch von Früchten und Pflanzenresten auf dem Trennorgan liegt, das beispielsweise in Form eines Hordenschüttlers ausgebildet sein kann. Entsprechend hat es sich als erstrebenswert herausgestellt, in erster Instanz das Dreschorgan und insbesondere in zweiter Instanz das jeweilige Trennorgan möglichst gleichmäßig mit Pflanzen zu beschicken, um eine möglichst effiziente Trennung der losgelösten Früchte von den Pflanzenresten bewerkstelligen zu können.

Deshalb umfasst die Sensoreinrichtung mehrere, über eine Breite des Förderkanals verteilte Sensorelemente mittels derer die Schichthöhe der geschnittenen Pflanzen innerhalb des Förderkanals jeweils berührungslos erfassbar ist. Mindestens eines dieser Sensorelemente ist in Form eines induktiven Sensorelements ausgebildet, wobei vorzugsweise sämtliche der verwendeten Sensorelemente als induktive Sensorelemente ausgeführt sind. Die Verwendung mehrerer Sensorelemente, die über die Breite des Förderkanals verteilt angeordnet sind, ermöglicht die Erfassung von Informationen betreffend die Schichthöhe der Pflanzen an verschiedenen Stellen innerhalb des Förderkanals. Hieraus lässt sich zumindest näherungsweise eine Information betreffend eine Querverteilung der geschnittenen Pflanzen innerhalb des Förderkanals gewinnen. Diese Informationen können sodann verarbeitet werden, um beispielsweise die jeweils dem Schrägförderer nachgeschalteten Arbeitsorgane, das heißt insbesondere ein Dreschorgan und/oder ein Trennorgan, dahingehend zu beeinflussen, dass die Gewinnung der Früchte der Pflanzen möglichst effizient erfolgt.

Der Mähdrescher umfasst mindestens eine Auswerteinheit die mit der Sensoreinrichtung in Daten übertragender Weise verbunden ist, beispielsweise mittels einer Kabelverbindung oder mittels einer kabellosen Funkverbindung. Die Auswerteinheit ist dazu geeignet, Informationen der einzelnen Sensorelemente derart auszuwerten, dass sich zumindest näherungsweise eine Information über die Querverteilung der geschnittenen Pflanzen innerhalb des Förderkanals ergibt. Besagte Information betrifft dabei zumindest eine Querverteilung über einen Teil der Breite des Förderkanals, vorzugsweise jedoch eine Querverteilung über die gesamte Breite des Förderkanals.

Um die Schichthöhe der geschnittenen Pflanzen über die Breite des Förderkanals hinweg möglichst sinnvoll aufzulösen und auf diese Weise eine Aussage betreffend die Querverteilung der geschnittenen Pflanzen treffen zu können, ist es weiterhin besonders von Vorteil, wenn die Sensoreinrichtung mindestens vier Sensorelemente umfasst, die über die Breite des Förderkanals verteilt angeordnet sind, vorzugsweise äquidistant.

Die Sensorelemente ausgestaltend kann es dabei besonders vorteilhaft sein, mindestens eine langgestreckte Sensorleiste zu verwenden, deren Längsachse sich vorzugsweise quer zu einer Förderrichtung des Schrägförderers erstreckt. Mittels einer solchen Sensorleiste ist es möglich, Informationen betreffend die Schichthöhe der geschnittenen Pflanzen nicht lediglich punktuell an einer bestimmten Stelle innerhalb des Förderkanals, sondern über eine Länge der Sensorleiste hinweg zu erfassen. Auf diese Weise kann die Information betreffend die Querverteilung über die Breite des Förderkanals besonders gut aufgelöst werden.

Unabhängig von der Anzahl der verwendeten Sensorelemente ist es weiterhin vorteilhaft, wenn die Sensoreinrichtung außerhalb des Förderkanals angeordnet ist. Insbesondere ist es denkbar, die Sensoreinrichtung unterhalb eines Kanalbodens des Förderkanals anzuordnen. Diese Anordnung der Sensoreinrichtung hat zunächst den Vorteil, dass sich innerhalb des Förderkanals möglichst wenige Einbauten befinden, die den Fluss der geschnittenen Pflanzen durch den Förderkanal stören könnten. Weiterhin kann der benötigte Bauraum innerhalb des Förderkanals reduziert werden, da im Unterschied zum Stand der Technik die Anordnung einer Messeinrichtung innerhalb des Förderkanals nicht länger erforderlich ist. Auch ist eine Anordnung mindestens eines Sensorelements an einer oder an beiden einander gegenüberliegenden Seitenwänden des Schrägförderers denkbar, was insbesondere im Hinblick auf eine zuverlässige Erfassung von Randbereichen des Förderkanals hilfreich ist.

In verfahrenstechnischer Hinsicht wird die zugrunde liegende Aufgabe erfindungsgemäß mittels eines Verfahrens mit den Merkmalen des Anspruchs 7 Vorteilhafte Ausgestaltungen dieses Verfahrens ergeben sich aus den Unteransprüchen 8 und 9.

Das erfindungsgemäße Verfahren ist mittels des erfindungsgemäßen Mähdreschers besonders einfach umsetzbar. Die sich daraus ergebenden Vorteile sind vorstehend bereits dargelegt. Insbesondere ist die berührungslose Erfassung der Schichthöhe nicht von einem bestimmten mechanischen Bereich abhängig, außerhalb dessen keine weitere Information betreffend die Schichthöhe erfasst werden kann. Im Ergebnis ist somit unabhängig von einer jeweiligen Betriebssituation durchgehend zuverlässig eine Aussage zu der Schichthöhe der geschnittenen Pflanzen innerhalb des Schrägförderers treffbar.

Die Schichthöhe wird an verschiedenen, über eine Breite des Förderkanals verteilten Messstellen erfasst. Dies bietet den Vorteil, dass zusätzlich zu einer reinen Aussage betreffend die Schichthöhe an einer bestimmten Stelle innerhalb des Förderkanals zumindest näherungsweise eine Aussage bezüglich einer Querverteilung der geschnittenen Pflanzen über eine Breite des Förderkanals hinweg getroffen werden kann. Wie vorstehend bereits dargelegt, kann eine solche Information betreffend die Querverteilung im Weiteren verwendet werden, um den Betrieb des jeweiligen Mähdreschers in positiver Weise, insbesondere hinsichtlich seiner Effizienz, zu beeinflussen.

Die Schichthöhe der geschnittenen Pflanzen wird ausschließlich berührungslos erfasst, das heißt ohne die Verwendung mechanischer Sensoren. Auf diese Weise kann insbesondere der Förderkanal frei von Sensorelementen gehalten werden, die ansonsten einen Fluss der geschnittenen Pflanzen innerhalb des Förderkanals stören könnten und zudem Bauraum beanspruchen würden.

Deshalb ist es wichtig, dass mittels der Sensoreinrichtung erfasste Informationen mittels einer Auswerteinheit ausgewertet werden, sodass sich eine Information über eine Querverteilung der geschnittenen Pflanzen innerhalb des Förderkanals ergibt. Besagte Information betrifft zumindest einen Teil einer Breite des Förderkanals, vorzugsweise jedoch die gesamte Breite des Förderkanals.

Das erfindungsgemäße Verfahren weiter ausgestaltend, wird diese Information betreffend die Querverteilung an nachfolgende Arbeitsorgane des Mähdreschers weitergeleitet, sodass diese Arbeitsorgane auf die Querverteilung eingestellt werden können. Insbesondere ist es denkbar, mindestens einen Betriebsparameter mindestens eines dem Schrägförderer nachfolgenden Arbeitsorgans in Abhängigkeit der Querverteilung der geschnittenen Pflanzen innerhalb des Förderkanals zu verändern.

Der erfindungsgemäße Mähdrescher sowie das erfindungsgemäße Verfahren werden nachstehend anhand eines Ausführungsbeispiels, das in den Figuren dargestellt ist, näher erläutert. Es zeigt:
- Fig. 1:: Einen schematischen Querschnitt durch einen erfindungsgemäßen Mähdrescher,
- Fig. 2:: Einen durch einen Schrägförderer des in Figur 1 dargestellten Mähdreschers geführten Längsschnitt,
- Fig. 3:: Eine isometrische Ansicht des Schrägförderers gemäß Figur 2 von einer Unterseite aus betrachtet und
- Fig. 4:: Eine Frontansicht des Schrägförderers gemäß Figur 2.

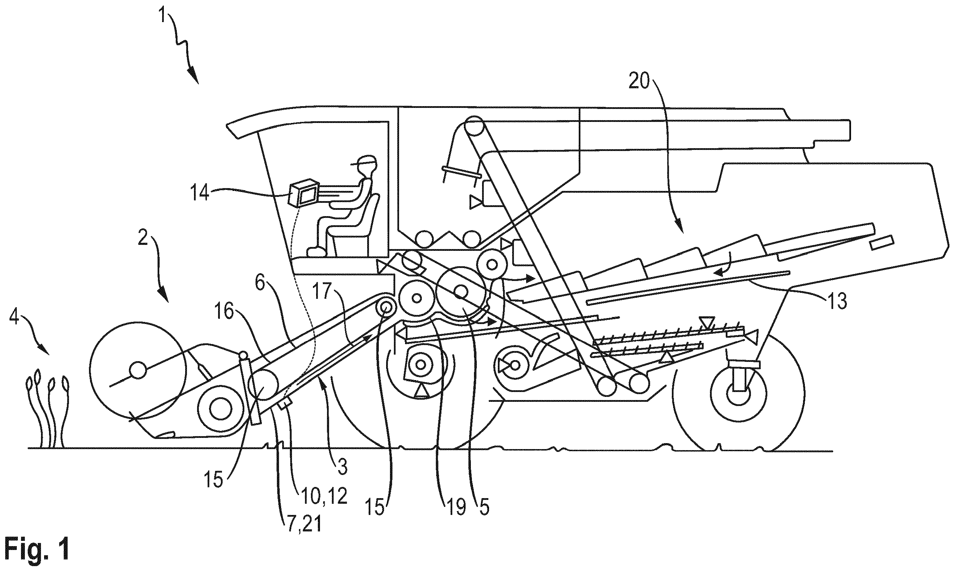

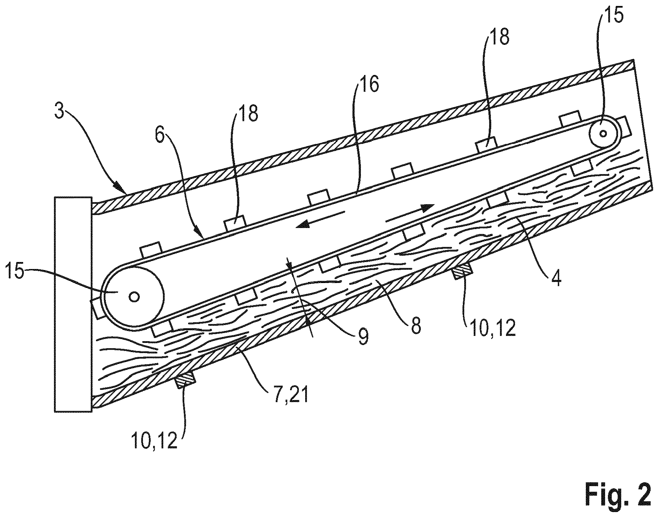

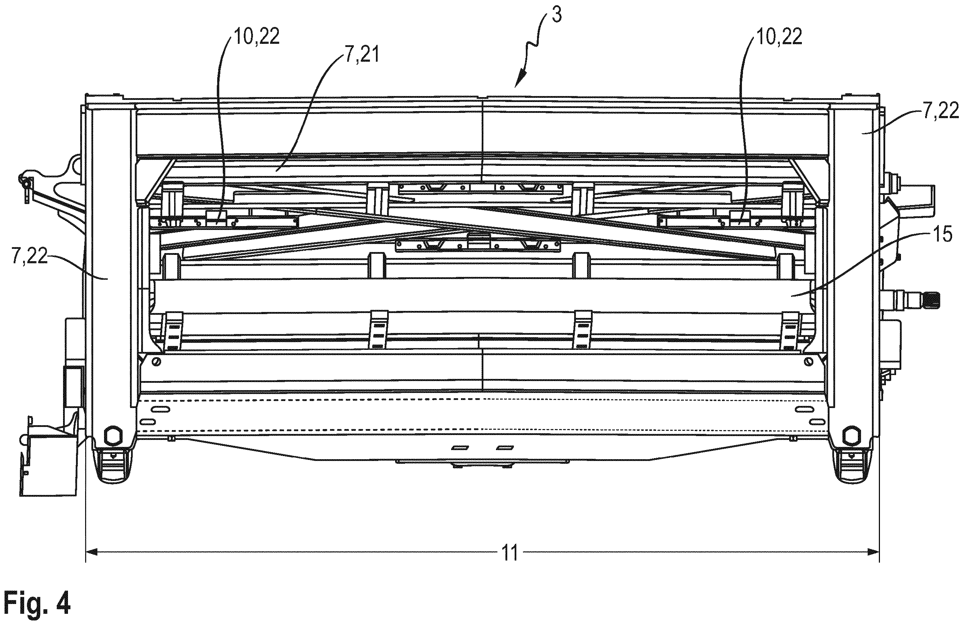

Ein Ausführungsbeispiel, das in den **Figuren 1 bis 4** dargestellt, umfasst einen erfindungsgemäßen Mähdrescher **1,** der an einem vorderen Ende mit einem Schneidwerk **2** ausgestattet ist. Mittels dieses Schneidwerks **2** ist der Mähdrescher **1** dazu in der Lage, Pflanzen **4** zu schneiden und sodann mittels eines Schrägförderers **3** in Richtung eines Dreschorgans **5** zu befördern. Eine sich daraus ergebende Förderrichtung **17** ist in **Figur 1** mittels eines Pfeils grafisch veranschaulicht. Die Pflanzen **4** sind hier von Gerste gebildet. Mittels des Dreschorgans **5** werden die geschnittenen Pflanzen **4** sodann gedroschen, sodass sich Früchte der Pflanzen **4** ablösen und anschließend getrennt von Pflanzenresten vorliegen. Ein Teil der losgelösten Früchte wird unmittelbar im Bereich des Dreschorgans **5** durch einen unten liegenden Dreschkorb **19** abgeschieden, während die Pflanzenreste gemeinsam mit darin vermischten Früchten in Richtung auf ein dem Dreschorgan **5** nachgeschaltetes Trennorgan **20** weitergeleitet werden. Besagtes Trennorgan **20** ist hier von einem Hordenschüttler gebildet, mittels dessen die verbliebenen Früchte von den Pflanzenresten getrennt und auf einen Rücklaufboden **13** geleitet werden. An einem rückwärtigen Ende des Mähdreschers **1** werden die verbliebenen Pflanzenreste schließlich ausgeworfen.

Der Schrägförderer **3** umfasst eine Fördereinrichtung **6,** der wiederum einander gegenüberliegende Rollen **15** sowie eine Mehrzahl von diese Rollen **15** umspannende Endlosgurte **16** aufweist. Zwischen den Endlosgurten **16,** die entlang einer Breite **11** des Schrägförderers **3** verteilt angeordnet sind, erstrecken sich jeweils Förderleisten **18.** Diese Förderleisten **18,** die auch als Schlagleisten bezeichnet werden, dienen dazu, formschlüssig mit den geschnittenen Pflanzen **4** einzugreifen und diese dadurch entgegen der Wirkung der Schwerkraft nach oben in Richtung des Dreschorgans **5** zu befördern. Insgesamt begrenzt die Fördereinrichtung **6** gemeinsam mit drei Kanalwänden **7** einen Förderkanal **8,** innerhalb dessen die geschnittenen Pflanzen **4** gefördert werden. Die Kanalwände **7** sind hier insbesondere von einem Kanalboden **21** sowie zwei sich gegenüberliegenden, jeweils senkrecht zu dem Kanalboden **21** angeordneten Seitenwänden **22** gebildet. Der Abstand zwischen diesen Seitenwänden **22** des Förderkanals **8** entspricht im Wesentlichen der Breite **11** des Schrägförderers **3** bzw. des Förderkanals **8.**

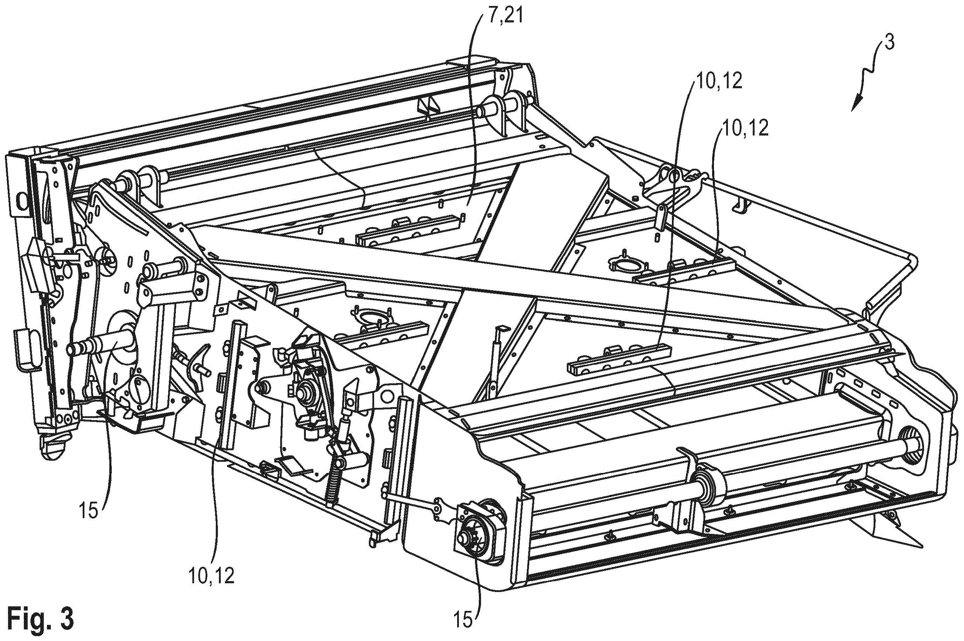

Weiterhin weist der erfindungsgemäßen Mähdrescher **1** eine Messeinrichtung auf, die hier erfindungsgemäß von einer Sensoreinrichtung **10** gebildet ist. Diese Sensoreinrichtung **10** wirkt mit dem Schrägförderer **3** derart zusammen, dass sie dazu geeignet ist, innerhalb des Förderkanals **8** eine Schichthöhe **9** von mittels des Schrägförderers **3** geförderter Pflanzen **4** zu erfassen. In dem gezeigten Beispiel umfasst die Sensoreinrichtung **10** insgesamt vier Sensorelemente **12,** die jeweils in Form induktiver Sensorelemente **12** ausgebildet sind. Diese Sensorelemente **12** sind hier außerhalb des Förderkanals **8** angeordnet, wobei die Sensorelemente **12** unterhalb des Kanalbodens **21** angeordnet sind. Auch ist eine alternative oder zusätzliche Anordnung von Sensorelementen **12** an einer oder beiden Seitenwänden **22** denkbar. Mittels der Ausgestaltung der Sensorelemente **12** als induktive Sensorelemente **12** ist es selbigen möglich, die Schichthöhe **9** der geschnittenen Pflanzen **4** berührungslos zu erfassen. Auf diese Weise ist es vor allem nicht erforderlich, innerhalb des Förderkanals **8** ein mechanisches Sensorelement anzuordnen, das in unmittelbaren Eingriff mit den geschnittenen Pflanzen **4** tritt. Die sich aus der Verwendung berührungslos arbeitender Sensorelemente **12** ergebenden Vorteile sind vorstehend bereits erläutert. In dem gezeigten Beispiel ist der Förderkanal 8 ungleichmäßig mit geschnittenen Pflanzen **4** gefüllt. Dies ist in **Figur 3** veranschaulicht, wobei der Förderkanal **8** in seinen beiden gegenüberliegenden, unmittelbar sich an die Seitenwände **22** anschließenden Randbereichen vergleichsweise stark gefüllt ist, das heißt die Schichthöhe 9 der Pflanzen zumindest im Wesentlichen einer gesamt verfügbaren Höhe des Förderkanals **8** entspricht, während der Förderkanal **8** in einem Mittelbereich eine demgegenüber deutlich geringere Schichthöhe **9** aufweist, die in dem gezeigten Beispiel etwa der Hälfte der Schichthöhe 9 in den Randbereichen entspricht.

Die Sensorelemente **12** sind in dem gezeigten Beispiel in Form langgestreckter Sensorleisten ausgeführt, die über die Breite **11** des Förderkanals **8** verteilt angeordnet sind, wobei eine davon abweichende Verteilung der Sensorelemente **12** selbstverständlich ebenso denkbar ist. Mithin ist die Sensoreinrichtung **10** dazu geeignet, die Schichthöhe **9** an verschiedenen Stellen innerhalb des Förderkanals **8** zu erfassen. Aus den jeweiligen Informationen an einzelnen Stellen des Förderkanals **8** betreffend die Schichthöhe **9** der geschnittenen Pflanzen **4** kann sodann mittels einer Auswerteinheit **14,** die in Daten übertragender Weise mit der Sensoreinrichtung **10** verbunden ist, eine Information betreffend eine Querverteilung der geschnittenen Pflanzen **4** innerhalb des Förderkanals **8** erzeugt werden. Insbesondere ist es denkbar, zwischen den diskreten Messwerten der Sensorelemente **12** linearer oder quadratisch zu interpolieren und auf diese Weise im Ergebnis eine Aussage betreffend die Querverteilung tätigen zu können. Die Verbindung zwischen Auswerteinheit **14** und Sensoreinrichtung **10** erfolgt in dem gezeigten Beispiel kabellos. Eine kabelgebundene Übertragung ist ebenso denkbar. Alternativ zu langgestreckten Sensorelementen **12** ist es ferner denkbar, mindestens ein, vorzugsweise mehrere, punktförmige Sensorelemente zu verwenden.

Das langgestreckte Sensorelement **12** ist vorteilhafterweise mit seiner Längsachse schräg zu einer Förderrichtung **17** des Schrägförderers **3** orientiert, sodass sie sich über einen Teil der Breite **11** des Förderkanals **8** erstreckt. Im Vergleich zu punktförmigen Sensorelementen ist mittels langgestreckter Sensorelemente **12** die Möglichkeit gegeben, Informationen betreffend die Schichthöhe **9** hoch aufgelöst über eine vergleichsweise kurze Strecke zu erhalten. Daraus ergibt sich der Vorteil, dass anhand solcher Informationen mittels der Auswerteinheit **14** eine umso höher qualitative Information betreffend die Querverteilung der geschnittenen Pflanzen **4** ermittelt werden kann.

Die Information betreffend die Querverteilung kann im Weiteren besonders gut dazu verwendet werden, dem Schrägförderer **3** nachgeschalteten Arbeitsorgane, beispielsweise das Dreschorgan **5** sowie das Trennorgan **20,** in einer Weise zu beeinflussen, dass mindestens ein Betriebsparameter mindestens eines der Arbeitsorgane verändert wird. Dabei versteht es sich, dass diese Veränderung insbesondere auf einen verbesserten Umgang mit den jeweils individuell innerhalb des Förderkanals **8** quer verteilten Pflanzen **4** abzielt, sodass eine Abtrennung der losgelösten Früchte von Pflanzenresten zu einem möglichst hohen Anteil gelingt. Auf diese Weise kann der erfindungsgemäßen Mähdrescher 1 besonders effizient betrieben werden.

### Bezugszeichenliste

- 1: Erntemaschine
- 2: Schneidwerk
- 3: Schrägförderer
- 4: Pflanzen
- 5: Dreschorgan
- 6: Fördereinrichtung
- 7: Kanalwand
- 8: Förderkanal
- 9: Schichthöhe
- 10: Sensoreinrichtung
- 11: Breite des Förderkanals
- 12: Sensorelement
- 13: Rücklaufboden
- 14: Auswerteinheit
- 15: Rolle
- 16: Endlosgurt
- 17: Förderrichtung
- 18: Förderleiste
- 19: Dreschkorb
- 20: Trennorgan
- 21: Kanalboden
- 22: Seitenwand

## Patentansprüche

1. Mähdrescher (1), insbesondere ein selbstfahrender Mähdrescher (1), umfassend
- mindestens ein Schneidwerk (2) zum Schneiden von mittels der Erntemaschine (1) zu erntender Pflanzen (4),
- mindestens einen Schrägförderer (3) zur Förderung der geschnittenen Pflanzen (4) in Richtung eines Dreschorgans (5), sowie
- mindestens ein Dreschorgan (5), mittels dessen derart Früchte von den geschnittenen Pflanzen (4) ablösbar sind, dass die Früchte sodann losgelöst von Pflanzenresten der Pflanzen (4) vorliegen,
wobei der Schrägförderer (3) mindestens eine umlaufend antreibbare Fördereinrichtung (6) aufweist, die gemeinsam mit mindestens einer Kanalwand (7) des Schrägförderers (3) einen Förderkanal (8) begrenzt, innerhalb dessen die geschnittenen Pflanzen (4) mittels der Fördereinrichtung (6) förderbar sind,
wobei der Schrägförderer (3) mit einer Messeinrichtung zusammenwirkt, mittels derer eine innerhalb des Förderkanals (8) vorliegende Schichthöhe (9) von mittels des Schrägförderers (3) geförderten Pflanzen (4) erfassbar ist, die Messeinrichtung mindestens eine Sensoreinrichtung (10) umfasst, mittels derer die Schichthöhe (9) berührungslos erfassbar ist,
**dadurch gekennzeichnet, dass**
die Sensoreinrichtung (10) mindestens ein induktives Sensorelement (12, 13) aufweist, die Sensoreinrichtung (10) mehrere, über eine Breite (11) des Förderkanals (8) verteilte Sensorelemente (12, 13) umfasst und
mindestens eine Auswerteinheit (14), die mit der Sensoreinrichtung (10) verbunden ist vorgesehen ist, wobei mittels der Auswerteinheit (14) Informationen der einzelnen Sensorelemente (12, 13) derart auswertbar sind, dass sich zumindest näherungsweise eine Information über eine Querverteilung der geschnittenen Pflanzen (4) innerhalb des Förderkanals (8) zumindest über einen Teil der Breite (11), vorzugsweise über die gesamte Breite (11), des Förderkanals (8) ergibt.

2. Mähdrescher (1) nach Anspruch 1, **dadurch gekennzeichnet, dass** die Sensoreinrichtung (10) mindestens vier Sensorelemente (12, 13) umfasst, die vorzugsweise äquidistant über eine Breite (11) des Förderkanals (8) angeordnet sind.

3. Mähdrescher (1) nach einem der Ansprüche 1 bis 2, **dadurch gekennzeichnet, dass** die Sensoreinrichtung (10) mindestens eine langgestreckte Sensorleiste (13) aufweist, deren Längsachse sich vorzugsweise quer zu einer Förderrichtung (17) des Schrägförderers (3) erstreckt.

4. Mähdrescher (1) nach einem der Ansprüche 1 bis 3, **dadurch gekennzeichnet, dass** die Sensoreinrichtung (10) außerhalb des Förderkanals (8), insbesondere unterhalb einer als Kanalboden (21) ausgebildeten Kanalwand (7), angeordnet ist.

5. Mähdrescher (1) nach einem der Ansprüche 1 bis 4, **dadurch gekennzeichnet, dass** die Fördereinrichtung (6) mindestens zwei einander gegenüberliegende Rollen (15) sowie mindestens einen die Rollen (15) umspannenden Endlosgurt (16) aufweist, wobei mindestens eine der Rollen (15) drehantreibbar ausgebildet ist.

6. Mähdrescher (1) nach Anspruch 5, **dadurch gekennzeichnet, dass** die Fördereinrichtung (6) eine Mehrzahl von quer zu einer Förderrichtung (17) verlaufende Förderleisten (18) aufweist.

7. Verfahren zum Betrieb eines Mähdreschers (1), umfassend die folgenden Verfahrensschritte:
a) Mittels eines Schneidwerks (2) werden zu erntende Pflanzen (4) geschnitten.
b) Die geschnittenen Pflanzen (4) werden mittels eines Schrägförderers (3) in Richtung eines Dreschorgans (5) gefördert, wobei innerhalb eines Förderkanals (8) des Schrägförderers (3) mittels einer Messeinrichtung eine Schichthöhe (9) der durch den Förderkanal (8) geförderten Pflanzen (4) erfasst wird.
c) Mittels des Dreschorgans (5) werden Früchte von den geschnittenen Pflanzen (4) abgelöst, sodass die Früchte sodann losgelöst von Pflanzenresten der Pflanzen (4) vorliegen,
d) Die Schichthöhe (9) der Pflanzen (4) wird mittels der in Form einer Sensoreinrichtung (10) ausgebildeten Messeinrichtung berührungslos erfasst, wobei
die Messeinrichtung mindestens eine Sensoreinrichtung (10)
umfasst, mittels derer die Schichthöhe (9) berührungslos erfassbar ist,
**dadurch gekennzeichnet, dass**
die Sensoreinrichtung (10) mindestens ein induktives Sensorelement (12, 13) aufweist, die Sensoreinrichtung (10) mehrere, über eine Breite (11) des Förderkanals (8) verteilte Sensorelemente (12, 13) umfasst und mindestens eine Auswerteinheit (14), die mit der Sensoreinrichtung (10) verbunden ist vorgesehen ist, wobei mittels der Auswerteinheit (14) Informationen der einzelnen Sensorelemente (12, 13) derart auswertbar sind, dass sich zumindest näherungsweise eine Information über eine Querverteilung der geschnittenen Pflanzen (4) innerhalb des Förderkanals (8) zumindest über einen Teil der Breite (11), vorzugsweise über die gesamte Breite (11), des Förderkanals (8) ergibt.

8. Verfahren nach Anspruch 7, **dadurch gekennzeichnet, dass** die Schichthöhe (9) ausschließlich berührungslos erfasst wird.

9. Verfahren nach Anspruch 7 **dadurch gekennzeichnet, dass** die Information betreffend die Querverteilung an nachfolgende Arbeitsorgane des Mähdreschers (1) weitergeleitet wird, woraufhin mindestens ein Betriebsparameter mindestens eines nachfolgenden Arbeitsorgans verändert wird.

## Claims

1. A combine harvester (1), in particular a self-propelled combine harvester (1), comprising:
- at least one cutting assembly (2) for cutting plants (4) to be harvested with the aid of the harvesting machine (1),
- at least one inclined conveyor (3) for conveying the cut plants (4) in the direction of a threshing means (5),
as well as
- at least one threshing means (5) with the aid of which fruits can be removed from the cut plants (4) in a manner such that the fruits are then separated from the plant residues of the plants (4),
wherein the inclined conveyor (3) has at least one revolving drivable conveying device (6) which, together with at least one channel wall (7) of the inclined conveyor (3), delimits a conveying channel (8) inside which the cut plants (4) can be conveyed with the aid of the conveying device (6),
wherein the inclined conveyor (3) cooperates with a measuring device with the aid of which the height (9) of a layer of plants (4) conveyed inside the conveying channel (8) with the aid of the inclined conveyor (3) can be detected, the measuring device comprising at least one sensor device (10) with the aid of which the layer height (9) can be detected in a contactless manner,
**characterized in that**
the sensor device (10) has at least one inductive sensor element (12, 13), the sensor device (10) comprises a plurality of sensor elements (12, 13) which are distributed over a width (11) of the conveying channel (8) and at least one evaluation unit (14) is provided which is connected to the sensor device (10), wherein with the aid of the evaluation unit (14), information from the individual sensor elements (12, 13) can be evaluated in a manner such that at least approximate information is generated regarding a transverse distribution of the cut plants (4) inside the conveying channel (8) over at least a portion of the width (11), preferably over the entire width (11) of the conveying channel (8).

2. The combine harvester (1) according to claim 1, **characterized in that** the sensor device (10) comprises at least four sensor elements (12, 13) which are preferably disposed equidistantly over a width (11) of the conveying channel (8).

3. The combine harvester (1) according to claim 1 or claim 2, **characterized in that** the sensor device (10) has at least one longitudinally extending sensor strip (13), the longitudinal axis of which preferably extending transversely to a conveying direction (17) of the inclined conveyor (3).

4. The combine harvester (1) according to one of claims 1 to 3, **characterized in that** the sensor device (10) is disposed outside the conveying channel (8), in particular below a channel wall (7) which is configured as the channel floor (21).

5. The combine harvester (1) according to one of claims 1 to 4, **characterized in that** the conveying device (6) has at least two rollers (15) which are opposite each other as well as at least one continuous belt (16) spanning the rollers (15), wherein at least one of the rollers (15) can be driven in rotation.

6. The combine harvester (1) according to claim 5, **characterized in that** the conveying device (6) has a plurality of conveying strips (18) running transversely to a conveying direction (17).

7. A method for operating a combine harvester (1), comprising the following steps of the method:
a) cutting plants (4) to be harvested with the aid of a cutting assembly (2),
b) conveying the cut plants (4) in the direction of a threshing means (5) with the aid of an inclined conveyor (3), wherein inside a conveying channel (8) of the inclined conveyor (3), a height (9) of a layer of plants (4) conveyed through the conveying channel (8) is detected with the aid of a measuring device,
c) removing fruits from the cut plants (4) with the aid of the threshing means (5) so that the fruits are then detached from plant residues of the plants (4),
d) detecting the height (9) of the layer of plants (4) in a contactless manner with the aid of the measuring device which is configured in the form of a sensor device (10), wherein the measuring device comprises at least one sensor device (10) with the aid of which the layer height (9) is detected in a contactless manner,
**characterized in that**
the sensor device (10) has at least one inductive sensor element (12, 13), the sensor device (10) comprises a plurality of sensor elements (12, 13) which are distributed over a width (11) of the conveying channel (8) and at least one evaluation unit (14) is provided which is connected to the sensor device (10), wherein with the aid of the evaluation unit (14), information from the individual sensor elements (12, 13) can be evaluated in a manner such that at least approximate information is generated regarding a transverse distribution of the cut plants (4) inside the conveying channel (8) over at least a portion of the width (11), preferably over the entire width (11) of the conveying channel (8).

8. The method according to claim 7, **characterized in that** the layer height (9) is detected in an exclusively contactless manner.

9. The method according to claim 7, **characterized in that** the information regarding the transverse distribution is transferred to downstream working units of the combine harvester (1), whereupon at least one operating parameter of at least one downstream working unit is varied.

## Revendications

1. Moissonneuse-batteuse (1), en particulier une moissonneuse-batteuse automotrice (1), incluant
- au moins un tablier de coupe (2) pour couper des plantes (4) à récolter au moyen de la machine de récolte (1),
- au moins un convoyeur incliné (3) pour convoyer les plantes coupées (4) en direction d'un organe de battage (5) ainsi que
- au moins un organe de battage (5) au moyen duquel des fruits sont détachables des plantes coupées (4), de façon que les fruits soient ensuite présents en étant débarrassés de restes de plantes des plantes (4),
le convoyeur incliné (3) comportant au moins un équipement de convoyage entraînable de manière tournante (6) qui, conjointement avec au moins une paroi de canal (7) du convoyeur incliné (3), limite un canal d'alimentation (8) à l'intérieur duquel les plantes coupées (4) sont convoyables au moyen de l'équipement de convoyage (6),
le convoyeur incliné (3) coopérant avec un équipement de mesure au moyen duquel une hauteur de couche (9), présente à l'intérieur du canal d'alimentation (8), de plantes (4) convoyées au moyen du convoyeur incliné (3) est détectable, l'équipement de mesure incluant au moins un équipement de capteur (10) au moyen duquel la hauteur de couche (9) est détectable sans contact,
**caractérisée en ce que**
l'équipement de capteur (10) comporte au moins un élément de capteur inductif (12, 13), l'équipement de capteur (10) inclut plusieurs éléments de capteur (12, 13) répartis sur une largeur (11) du canal d'alimentation (8), et au moins une unité d'analyse (14) qui est connectée à l'équipement de capteur (10) étant prévue, des informations des différents éléments de capteur (12, 13) étant analysables au moyen de l'unité d'analyse (14), de façon à obtenir au moins par approximation une information sur une répartition transversale des plantes coupées (4) à l'intérieur du canal d'alimentation (8) au moins sur une partie de la largeur (11), de préférence sur la largeur totale (11), du canal d'alimentation (8).

2. Moissonneuse-batteuse (1) selon la revendication 1, **caractérisée en ce que** l'équipement de capteur (10) inclut au moins quatre éléments de capteur (12, 13) qui sont disposés de préférence de manière équidistante sur une largeur (11) du canal d'alimentation (8).

3. Moissonneuse-batteuse (1) selon une des revendications 1 à 2, **caractérisée en ce que** l'équipement de capteur (10) comprend au moins une barrette de capteur allongée (13) dont l'axe longitudinal s'étend de préférence transversalement à une direction de convoyage (17) du convoyeur incliné (3).

4. Moissonneuse-batteuse (1) selon une des revendications 1 à 3, **caractérisée en ce que** l'équipement de capteur (10) est disposé à l'extérieur du canal d'alimentation (8), en particulier au-dessous d'une paroi de canal (7) conformée en fond de canal (21).

5. Moissonneuse-batteuse (1) selon une des revendications 1 à 4, **caractérisée en ce que** l'équipement de convoyage (6) comporte au moins deux rouleaux en vis-à-vis mutuel (15) ainsi qu'au moins une courroie sans fin (16) entourant au moins un des rouleaux (15), au moins un des rouleaux (15) étant conçu de manière entraînable en rotation.

6. Moissonneuse-batteuse (1) selon la revendication 5, **caractérisée en ce que** l'équipement de convoyage (6) comporte une pluralité de barrettes de convoyage (18) s'étendant transversalement à une direction de convoyage (17).

7. Procédé de fonctionnement d'une moissonneuse-batteuse (1), incluant les étapes de procédé suivantes :
a) Des plantes à récolter (4) sont coupées au moyen d'un tablier de coupe (2).
b) Les plantes coupées (4) sont convoyées au moyen d'un convoyeur incliné (3) en direction d'un organe de battage (5), une hauteur de couche (9) des plantes (4) convoyées à travers le canal d'alimentation (8) étant détectée à l'intérieur d'un canal d'alimentation (8) du convoyeur incliné (3) au moyen d'un équipement de mesure.
c) Des fruits sont séparés des plantes coupées (4) au moyen de l'organe de battage (5), de sorte que les fruits sont ensuite présents en étant débarrassés de restes de plantes des plantes (4).
d) la hauteur de couche (9) des plantes (4) est détectée sans contact au moyen de l'équipement de mesure conçu sous la forme d'un équipement de capteur (10),
l'équipement de mesure incluant au moins un équipement de capteur (10) au moyen duquel la hauteur de couche (9) est détectable sans contact,
**caractérisé en ce que**
l'équipement de capteur (10) comporte au moins un élément de capteur inductif (12, 13), l'équipement de capteur (10) inclut plusieurs éléments de capteur (12, 13) répartis sur une largeur (11) du canal d'alimentation (8), et au moins une unité d'analyse (14) qui est connectée à l'équipement de capteur (10) étant prévue, des informations des différents éléments de capteur (12, 13) étant analysables au moyen de l'unité d'analyse (14), de façon à obtenir au moins par approximation une information sur une répartition transversale des plantes coupées (4) à l'intérieur du canal d'alimentation (8) au moins sur une partie de la largeur (11), de préférence sur la largeur totale (11), du canal d'alimentation (8).

8. Procédé selon la revendication 7, **caractérisé en ce que** la hauteur de couche (9) est détectée exclusivement sans contact.

9. Procédé selon la revendication 7, **caractérisé en ce que** l'information relative à la répartition transversale est transmise à des organes de travail postérieurs de la moissonneuse-batteuse (1), après quoi au moins un paramètre d'exploitation au moins d'un organe de travail postérieur est modifié.
